## Europäisches Patentamt
## European Patent Office
## Office européen des brevets

(11) Numéro de publication: **0 206 923**
**A1**

# DEMANDE DE BREVET EUROPEEN

(21) Numéro de dépôt: **86401307.3**

(22) Date de dépôt: **16.06.86**

(51) Int. Cl.⁴: **H 04 B 1/034,** H 01 H 9/02

(30) Priorité: **14.06.85 FR 8509047**

(43) Date de publication de la demande: **30.12.86**
**Bulletin 86/52**

(84) Etats contractants désignés: **BE DE GB NL**

(71) Demandeur: **ASSOCIATION POUR LA RATIONALISATION ET LA MECANISATION DE L'EXPLOITATION FORESTIERE A.R.M.E.F., 164, Boulevard Haussmann, F-75008 Paris (FR)**

(72) Inventeur: **Salvignol, Christian, Rue du Four, F-84240 Grambois (FR)**

(74) Mandataire: **Nony, Michel et al, Cabinet NONY & CIE 29, rue Cambacérès, F-75008 Paris (FR)**

(54) **Emetteur de radiocommande, notamment pour tracteur forestier ou analogue.**

(57) L'invention est relative à un émetteur de radiocommande, notamment pour tracteur forestier ou analogue.

Il est logé dans un boîtier (1) sensiblement parallélépipédique relativement plat présentant deux faces de base opposées (2, 3) et quatre faces latérales (4, 7), une des faces de base (2) comporte des moyens (9) pour sa fixation à la ceinture d'un utilisateur avec deux de ses faces latérales sensiblement horizontales (4, 5), son autre face de base (3) est sensiblement lisse, et ses commandes sont montées sur au moins la face latérale horizontale supérieure (4).

EP 0 206 923 A1

Emetteur de radiocommande, notamment pour tracteur forestier ou analogue.

La présente invention concerne un émetteur de radiocommande, notamment pour tracteur forestier ou analogue.

On connaît de tels émetteurs destinés à être fixés à la ceinture d'un utilisateur pour la radiocommande d'un tracteur forestier. Ces émetteurs connus présentent toutefois l'inconvénient d'être lourds et peu commodes à utiliser.

En particulier, les commandes de l'émetteur sont disposées sur la face avant du boîtier, opposée à la face en contact avec le corps de l'utilisateur, de sorte qu'ils sont peu visibles. Cette disposition est en outre dangereuse dans le cas de la radiocommande d'un tracteur forestier, du fait que l'utilisateur est assez souvent amené à s'allonger sur le ventre pour passer un câble sous un arbre, et risque ainsi de manoeuvrer les commandes intempestivement.

La présente invention vise à pallier ces inconvénients en fournissant un émetteur de radiocommande qui soit facile à utiliser et qui présente une grande sécurité pour l'utilisateur.

A cet effet, l'invention a pour objet un émetteur de radiocommande, notamment pour tracteur forestier ou analogue, caractérisé par le fait qu'il est logé dans un boîtier sensiblement parallélépipédique relativement plat présentant deux faces de base opposées et quatre faces latérales, que l'une des faces de base comporte des moyens pour sa fixation à la ceinture d'un utilisateur avec deux de ses faces latérales sensiblement horizontales, que son autre face de base est sensiblement lisse, et que ses commandes sont montées sur au moins la surface latérale horizontale supérieure.

Le fait qu'il soit plat entraîne une moindre gêne pour le porteur de l'émetteur. En outre, sa face avant lisse évite son accrochage et la disposition des commandes sur la face supérieure garantit leur visibilité et leur accessibilité tout en permettant de mieux assurer leur protection.

Les commandes peuvent être montées non seulement sur la face latérale horizontale supérieure, mais également sur une des faces latérales adjacentes, par exemple sur la face verticale se trouvant la plus proche de l'axe du corps de l'utilisateur lorsque l'émetteur est porté à la ceinture légèrement sur le côté.

Un des coins du boîtier peut être coupé sensiblement perpendiculairement aux faces de base et une commande être montée sur le pan coupé ainsi formé.

En particulier, cette commande montée sur le pan coupé peut être un bouton tournant. Il peut s'agir par exemple de la commande du régime moteur dans le cas d'un tracteur forestier.

Par contre, au moins certaines commandes montées sur les faces latérales peuvent être constituées de boutons du type interrupteur.

Il peut s'agir, toujours dans le même cas, de commandes de treuillage et détreuillage ou de la commande marche-arrêt du moteur.

Plus particulièrement, l'un au moins de ces interrupteurs peut avoir notamment pour fonction de provoquer l'alimentation de l'émetteur, et le bouton tournant pour fonction l'émission d'un signal.

Ceci présente comme avantage que le signal correspondant au bouton tournant, par exemple le signal correspondant au régime moteur, n'est pas émis en permanence, mais uniquement lorsqu'un interrupteur est actionné.

Lorsque cet interrupteur a pour fonction, outre l'alimentation du moteur, la commande du démarreur, on associe l'émetteur selon l'invention à un dispositif de sécurité invalidant la commande de démarreur lorsque le moteur tourne.

On obtient ainsi un avantage supplémentaire résidant dans la protection du démarreur. En effet, lorsque le moteur tourne à bas régime et que l'utilisateur en est relativement éloigné, il peut ne pas entendre le bruit du moteur et actionner la commande de démarreur, ce qui peut avoir pour effet d'endommager ce dernier.

Dans un mode de réalisation particulier de l'invention, au moins la face de base lisse du boîtier est prolongée au-delà de la face latérale portant les commandes, pour former une nervure en saillie en bordure de cette face latérale.

Cette bordure a pour effet de protéger les commandes.

Dans le cas où le boîtier comporte un pan coupé comme décrit ci-dessus, cette nervure peut être interrompue dans la zone du pan coupé, ce qui donne un meilleur accès à la commande située sur ce pan coupé.

On peut en outre prévoir un contact au mercure pour l'émission d'un signal lorsque l'émetteur est incliné par rapport à sa position normale de fonctionnement.

Cet émetteur peut être associé à un temporisateur et à une alarme, qui est ainsi déclenchée lorsque l'utilisateur reste allongé un certain temps, ce qui est signe d'accident.

Les moyens de fixation du boîtier à la ceinture peuvent comprendre un conduit ménagé dans ladite face de base et sensiblement parallèle auxdites faces horizontales.

On décrira maintenant un mode de réalisation particulier de l'invention en référence aux dessins schématiques annexés dans lesquels :

- la figure 1 est une vue en perspective d'un émetteur selon l'invention,

- la figure 2 est une vue en coupe selon la ligne II-II de la figure 1,

- la figure 3 est une vue en coupe selon la ligne III-III de la figure 1, et

- la figure 4 est un schéma électrique de l'émetteur selon l'invention.

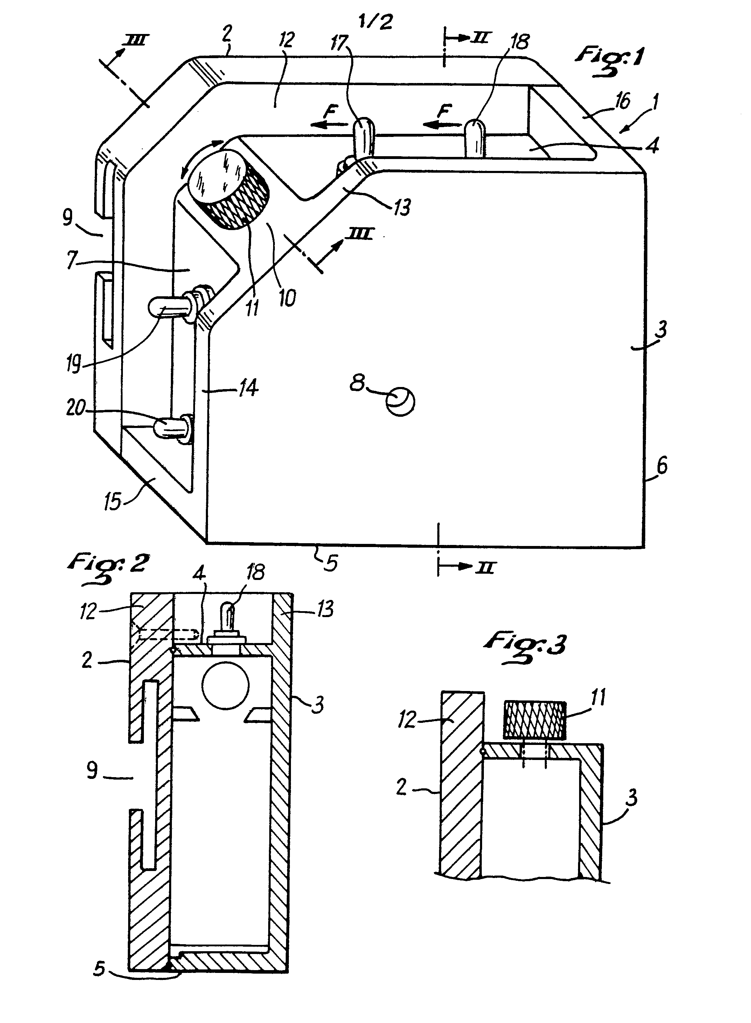

Cet émetteur est logé dans un boîtier 1 généralement parallélépipédique possédant une face arrière 2, une face avant 3, une face supérieure 4, une face inférieure 5 et deux faces verticales 6 et 7.

La face avant 3, la face inférieure 5 et la face verticale 6 sont lisses. Toutefois, la face avant 3 peut comporter un témoin d'émission 8.

Une gorge horizontale 9 est prévue dans la face arrière 2 pour le passage de la ceinture de l'utilisateur.

Le dièdre formé par la face supérieure 4 et la face verticale 7 est coupé de manière à former un pan coupé, ou surface inclinée 10, sur laquelle est monté un bouton tournant 11 dont la fonction sera décrite ci-après.

La face arrière 2 est prolongée au-delà de la face supérieure 4, du pan coupé 10, et de la face verticale 7 pour former une nervure de protection 12 le long du bord arrière des faces 4 et 7 et du pan coupé 10.

De même la face avant 3 est prolongée au-delà des faces 4 et 7, mais non pas au-delà du pan coupé 10, de manière à former une nervure 13 le long du bord avant de la face 4, et une nervure 14 le long du bord avant de la face 7.

Enfin, la face inférieure 5 et la face verticale 6 sont prolongées respectivement en 15 au-delà de la face verticale 7, et en 16 au-delà de la face supérieure 4, pour former également des nervures de protection.

Deux boutons 17 et 18 sont montés sur la face supérieure 4, et deux boutons 19 et 20 sont montés sur la face verticale 7. Les boutons 17 à 20 sont des boutons à trois positions.

L'émetteur 1 est destiné à la radiocommande d'un tracteur forestier. Le bouton 19 comporte une position neutre, une position "démarrage" fugitive provoquant l'entraînement du démarreur lorsque le moteur est à l'arrêt, et une position "arrêt" fugitive provoquant l'arrêt du moteur. Une sécurité invalide la commande de démarrage lorsque le moteur tourne.

Le bouton tournant 11 est la commande du régime moteur.

Les boutons 17 et 18 correspondent chacun à un treuil et comportent une position neutre, une position de treuillage fugitive commandant l'enroulement du treuil et une position de détreuillage permanente commandant le débrayage du treuil. Le bouton 20 sert à la mise sous tension du dispositif et possède une position "marche", et une position "arrêt-charge des batteries".

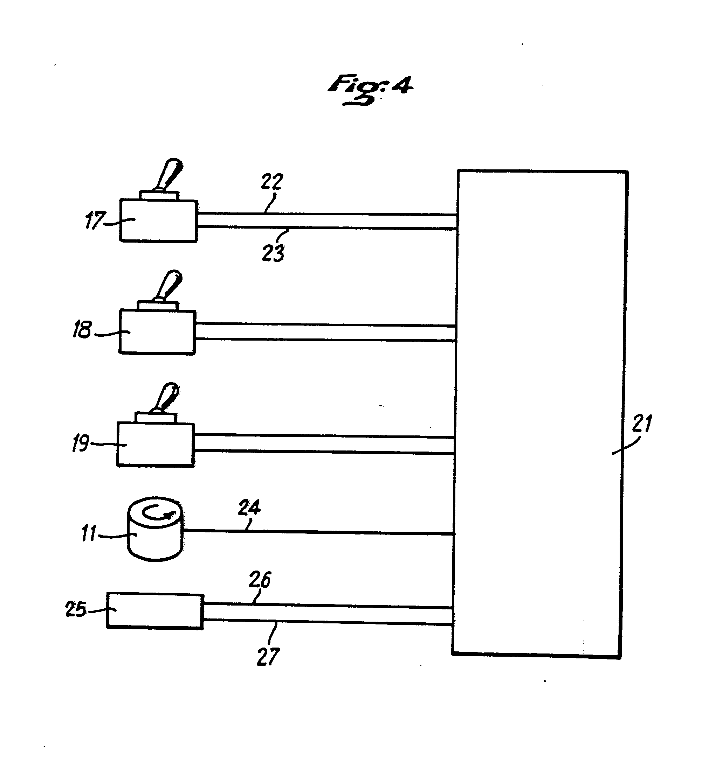

La figure 4 montre le module d'émission 21 et ses connexions aux commandes.

Afin d'éviter que la commande de régime moteur n'émette en permanence, chaque bouton 17, 18 et 19 possède à la fois une fonction d'émission de signal et une fonction d'alimentation. Par conséquent, l'émetteur 21 n'est alimenté que lorsque l'un de ces trois boutons est actionné.

Par contre, le bouton tournant 11 a pour seule fonction celle de l'émission du signal correspondant au régime moteur.

Ce signal correspondant au régime moteur n'est par conséquent émis que lorsque l'un des trois boutons 17, 18 et 19 est actionné.

La figure 4 montre entre le module d'émission 21 et chacun des boutons 17, 18 et 19 une ligne 22 correspondant à l'alimentation de l'émetteur et une ligne 23 correspondant au signal. Par contre, une seule ligne 24 correspondant au signal relie le bouton 11 au module d'émission 21.

Du fait de la position du bouton 11 sur la surface inclinée 10 et de l'absence de nervures de protection entre les nervures 13 et 14, le bouton 11 est facilement accessible et peut être actionné de la même main que l'un des boutons 17, 18 et 19.

De préférence, la fonction treuillage des boutons 17 et 18 est obtenue pour un déplacement dans le sens des flèches F, permettant une manoeuvre simultanée aisée du bouton 11.

Enfin, la figure 4 représente en 25 un contact au mercure possédant sa ligne d'alimentation 26 et sa ligne de signal 27 reliée au module d'émission 21.

Une temporisation est prévue pour provoquer automatiquement le déclenchement d'une alarme lorsque le signal correspondant à ce contact 25 a été émis pendant une durée prédéterminée. Cette alarme se déclenche donc lorsque le porteur de l'émetteur a été accidenté et se trouve allongé.

Diverses variantes et modifications peuvent bien entendu être apportées à la description qui précède sans sortir pour autant ni du cadre ni de l'esprit de l'invention.

REVENDICATIONS

1 - Emetteur de radiocommande, notamment pour tracteur forestier ou analogue, caractérisé par le fait qu'il est logé dans un boîtier (1) sensiblement parallélépipédique relativement plat présentant deux faces de base opposées (2,3) et quatre faces latérales (4-7), que l'une des faces de base (2) comporte des moyens (9) pour sa fixation à la ceinture d'un utilisateur avec deux de ses faces latérales sensiblement horizontales (4,5), que son autre face de base (3) est sensiblement lisse, que ses commandes sont montées sur au moins la face latérale horizontale supérieure (4), et qu'au moins la face de base lisse du boîtier est prolongée au delà de la face latérale portant les commandes pour former une nervure (12-16) en saillie en bordure de cette zone latérale.

2 - Emetteur selon la revendication 1, caractérisé par le fait que ses commandes sont montées sur deux faces latérales adjacentes (4,7).

3 - Emetteur selon l'une quelconque des revendications 1 et 2, caractérisé par le fait qu'un des coins du boîtier est coupé sensiblement perpendiculairement aux faces de base et qu'une commande (11) est montée sur le pan coupé (10) ainsi fermé.

4 - Emetteur selon la revendication 3, caractérisé par le fait que ladite commande montée sur le pan coupé est un bouton tournant.

5 - Emetteur selon l'une quelconque des revendications 1 à 4, caractérisé par le fait qu'au moins certaines commandes montées sur les faces latérales (17,20) sont des boutons du type interrupteur.

6 - Emetteur selon l'ensemble des revendications 4 et 5, caractérisé par le fait que l'un au moins desdits interrupteurs a notamment pour fonction de provoquer l'alimentation de l'émetteur, et que le bouton tournant a pour fonction l'émission d'un signal.

7 - Emetteur selon la revendication 6, destiné à la commande d'un moteur, caractérisé par le fait que ledit bouton tournant a pour fonction la commande de régime du moteur, que ledit interrupteur a pour fonction, outre l'alimentation de l'émetteur, la commande du démarreur, et qu'il est associé à un dispositif de sécurité invalidant la commande de démarreur lorsque le moteur tourne.

8 - Emetteur selon la revendication 3, caractérisé par le fait que ladite nervure est interrompue dans la face du pan coupé.

9 - Emetteur selon l'une quelconque des revendications 1 à 8, caractérisé par le fait qu'il comporte un contact au mercure (25) pour l'émission d'un signal lorsqu'il est incliné par rapport à sa position normale de fonctionnement.

10 - Emetteur selon l'une quelconque des revendications 1 à 9, caractérisé par le fait que lesdits moyens de fixation comprennent un conduit ménagé dans ladite face de base et sensiblement parallèle auxdites faces horizontales.

0206923

Fig. 1

Fig. 2

Fig. 3

1/2

Fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Ci 4) |
|---|---|---|---|
| Y | US-A-4 041 394 (R.W. PATE) <br> * Page de garde, abrégé; colonne 1, ligne 15 - colonne 2, ligne 10; figure 1 * <br> --- | 1,2 | H 04 B  1/034 <br> H 01 H  9/02 |
| Y | GB-A-2 067 051 (INPAMA) <br> * Page de garde, abrégé; page 1, ligne 124 - page 2, ligne 87; figures 1,2 * | 1,2 | |
| A | | 5,9 | |
| Y | --- <br> US-A-3 867 600 (C.D. PHILLIPS) <br> * Colonne 1, ligne 70 - colonne 2, ligne 11; figures 1-3 * | 1,2 | |
| A | | 5-7 | DOMAINES TECHNIQUES RECHERCHES (Int. Cl.4) |
| A | DE-B-1 275 638 (CHARBONNAGES DE FRANCE) <br> * Colonne 4, lignes 24-35,43-57; figures 1,3 * <br> --- | 1 | H 04 B <br> H 01 H <br> H 05 K <br> A 63 H <br> G 05 D |
| A | US-A-4 121 160 (T.R. CATALDO) <br> * Colonne 2, lignes 5-23; figure 1 * <br> --- | 1 | |
| A | CH-A- 474 172 (UNINORM) <br> * Colonne 3, lignes 29-62; figure 1 * <br> --- | 1,2,5 | |

Le présent rapport de recherche a été établi pour toutes les revendications

| Lieu de la recherche <br> LA HAYE | Date d'achèvement de la recherche <br> 19-09-1986 | Examinateur <br> VAN WEEL E.J.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82